# EUROPEAN PATENT APPLICATION

(11) **EP 2 784 771 A1**
(43) Date of publication of application: **01.10.2014**
(21) Application number: 14161358.8
(22) Date of filing: 24.03.2014
(51) Int. Cl.: G09G 5/28, G09G 5/22, G09G 5/24

(54) **Display apparatus and method of outputting text thereof**

(30) Priority: 25.03.2013 US 201361804857 P; 17.04.2013 US 201361812890 P; 25.10.2013 KR 20130127773
(71) Applicant: Samsung Electronics Co., Ltd., Suwon-si Gyeonggi-do 443-742 (KR)
(72) Inventor: Jo, Sang-beom, Suwon-si, Gyeonggi-do (KR); Jung, Kyu-hun, Suwon-si, Gyeonggi-do (KR); Cho, Bong-je, Hwaseong-si, Gyeonggi-do (KR); Park, Chan-min, Seoul (KR); Shin, Jin-su, Seoul (KR)
(74) Representative: Brandon, Paul Laurence

(57) **Abstract**

A display apparatus (100) and a text output method thereof are provided. The text output method of a display apparatus acquires character information, determines character correction information for character information according to at least one of a characteristic of the display apparatus and a characteristic of an input character, generates a contour line of the character based on the character information and the character correction information to perform rendering, and outputs the rendered character.

## Description

### BACKGROUND

### 1. Field

Apparatuses and methods consistent with exemplary embodiments relate to display apparatuses and a methods of outputting text thereof, and more particularly, to display apparatuses capable of correcting character input by a user and outputting the corrected character, and methods of outputting text thereof.

### 2. Description of the Related Art

When a user command for outputting text is input from a user, existing display apparatuses acquire one or more pieces of character information from a pre-stored font file. The display apparatuses generate a contour line of a character based on the character information, determine pixel values of pixels to be included in the generated contour line, performing rendering on the character based on the pixel values, and output the rendered character.

However, in the display apparatuses of the related art, since characteristics of the display apparatuses or input characters are not considered, readability or visibility of output characters are degraded. For example, when a small-sized character is input, a phenomenon in which strokes overlap of the character to be illegible, a phenomenon in which a contour of a character is blurred, a step phenomenon in which a stroke of a character is viewed to be broken in the character having many curve lines or oblique lines, a phenomenon in which a character size or a space between characters in a two byte language such as Hangul or Chinese character is not uniform, a phenomenon in which color of a character is viewed to be unclear, or a phenomenon in which a character is viewed to be thin, occurs.

Therefore, there is a need for a method for improving readability and visibility of text output from a display apparatus.

### SUMMARY

One or more exemplary embodiments may overcome the above disadvantages and other disadvantages not described above. However, it is understood that one or more exemplary embodiments are not required to overcome the disadvantages described above, and may not overcome any of the problems described above.

One or more exemplary embodiments are to provide a display apparatus capable of improving readability and visibility of a character output from the display apparatus by determining character correction information using at least one of a characteristic of the display apparatus and a characteristic of an input character, and outputting the character based on the determined character correction information, and a method of outputting text thereof.

According to an aspect of an exemplary embodiment, there is provided a method of outputting text of a display apparatus. The method may include: acquiring character information; determining character correction information for character information according to at least one of a characteristic of the display apparatus and a characteristic of an input character; generating a contour line of the character based on the character information and the character correction information to perform rendering of the character; and outputting the rendered character.

The characteristic of the display apparatus may include at least one from amongst a resolution of the display apparatus, a current brightness of the display apparatus, a display type of the display apparatus, a battery level of the display apparatus, and a type of an application executed in the display apparatus.

The determining may include acquiring a resolution information of the display apparatus; and determining the character correction information for the character by applying a weight according to character size information included in the character information and the resolution information of the display apparatus.

The determining may include acquiring the current brightness information of the display apparatus; and determining the character correction information for color of the character by applying a weight according to the acquired current brightness information.

The determining may include determining an application currently executed in the display apparatus; and determining the character correction information for the character according to the determined application.

The characteristic of the character may include at least one from amongst a size of the character, a stroke complexity of the input character, a style of the character, colors of the character and a background, a stroke thickness of the character, a language kind of the character, and a Unicode category of the character.

The determining may include determining the stroke complexity based on a kind of the character; and determining the character correction information for the stroke thickness of the character according to the determined stroke complexity.

The determining may include determining the colors of the character and the background; and determining the character correction information for color density of the character by comparing the color of the character with the color of the background.

The determining may include determining whether a type of the character is a sans-serif type or a serif type; and calculating character edge correction intensity by applying a weight according to resolution of the display apparatus and a character size and determining the character correction information for the character, when the type of the character is the serif type.

The character correction information may include at least one from amongst a character size correction information, a character thickness correction information, a character style correction information, a hinting correction information, a character color density correction information, and a character edge correction information.

The determining may include determining the character correction information using metadata in which preset character correction information is stored according to the at least one of the characteristic of the display apparatus and the characteristic of the input character.

The method may further include performing post-processing including performing correction on character color of the rendered character, removing a step effect from the rendered character, or processing a contour of the rendered character.

The character may be one of a character input from a user and a character received from an other device.

According to an aspect of an exemplary embodiment, there is provided a display apparatus. The display apparatus may include: an input unit configured to input a user command for acquiring character information; a storage unit configured to store character correction information; a controller configured to determine the character correction information for input character information according to at least one of a characteristic of the display apparatus and a characteristic of a character input through the input unit, and generate a contour line of the input character based on the character information and the character correction information to perform rendering of the character; and an output unit configured to output the rendered character.

The characteristic of the display apparatus may include at least one from amongst a resolution of the display apparatus, a current brightness of the display apparatus, a display type of the display apparatus, a battery level of the display apparatus, and a type of an application executed in the display apparatus.

The controller may acquire the resolution information of the display apparatus, and determine the character correction information for the input character by applying a weight according to character size information included in the character information and the resolution information of the display apparatus.

The controller may acquire the current brightness information of the display apparatus, and determine the character correction information for color of the input character by applying a weight according to an acquired current brightness information.

The controller may determine an application currently executed in the display apparatus, and determine the character correction information for the input character according to the determined application.

The characteristic of the input character may include at least one from amongst a size of the input character, a stroke complexity of the input character, a style of the input character, colors of the input character and a background, a stroke thickness of the input character, a language kind of the input character, and a Unicode category of the input character.

The controller may determine the stroke complexity based on a kind of the input character, and determine the character correction information for the stroke thickness of the input character according to the determined stroke complexity.

The controller may determine the colors of the input character and the background, and determine the character correction information for color density of the input character by comparing the color of the input character with the color of the background.

The controller may determine whether a type of the input character is a sans-serif type or a serif type, and calculate character edge correction intensity by applying a weight according to a resolution of the display apparatus and the size of the input character and determine the character correction information for the input character, when the type of the input character is the serif type.

The character correction information may include at least one from amongst a character size correction information, a character thickness correction information, a character style correction information, a hinting correction information, a character color density correction information, and a character edge correction information.

The controller may determine the character correction information using metadata in which preset character correction information is stored according to the at least one of the characteristic of the display apparatus and the characteristic of the input character.

The controller may further perform post-processing including performing correction on character color of the rendered character, removing a step effect from the rendered character, or processing a contour of the rendered character.

According to an aspect of an exemplary embodiment, there is provided a method of outputting text of a display apparatus. The method may include: acquiring character information; determining character correction information for character information according to a characteristic of the display apparatus and a characteristic of an input character; generating a contour line of the character based on the character information and the character correction information to perform rendering of the character; and outputting the rendered character.

The characteristic of the display apparatus may include at least one from amongst a resolution of the display apparatus, a current brightness of the display apparatus, a display type of the display apparatus, a battery level of the display apparatus, and a type of an application executed in the display apparatus.

The characteristic of the character may include at least one from amongst a size of the character, a stroke complexity of the input character, a style of the character, colors of the character and a background, a stroke thickness of the character, a language kind of the character, and a Unicode category of the character.

According to an aspect of an exemplary embodiment, there is provided a display apparatus. The display apparatus may include: an input unit configured to input a user command for acquiring character information; a storage unit configured to store character correction information; a controller configured to determine the character correction information for input character information according to a characteristic of the display apparatus and a characteristic of a character input through the input unit, and generate a contour line of the input character based on the character information and the character correction information to perform rendering of the character; and an output unit configured to output the rendered character.

The characteristic of the display apparatus may include at least one from amongst a resolution of the display apparatus, a current brightness of the display apparatus, a display type of the display apparatus, a battery level of the display apparatus, and a type of an application executed in the display apparatus.

The characteristic of the input character may include at least one from amongst a size of the input character, a stroke complexity of the input character, a style of the input character, colors of the input character and a background, a stroke thickness of the input character, a language kind of the input character, and a Unicode category of the input character.

Additional aspects and advantages of the exemplary embodiments will be set forth in the detailed description, will be obvious from the detailed description, or may be learned by practicing the exemplary embodiments.

According to an aspect of an exemplary embodiment, there is provided a display apparatus. The display apparatus may include: a storage unit configured to store character correction information; a controller configured to determine the character correction information for input character information according to at least one of a characteristic of the display apparatus and a characteristic of a character, and generate a contour line of the character based on the character information and the character correction information to perform rendering; and an output unit configured to output the rendered character.

### BRIEF DESCRIPTION OF THE DRAWINGS

The above and/or other aspects will be more apparent by describing in detail exemplary embodiments, with reference to the accompanying drawings, in which:
FIG. 1 is a block diagram illustrating a configuration of a display apparatus according to an exemplary embodiment;
FIG. 2 is a block diagram illustrating modules stored in a storage unit of a display apparatus according to an exemplary embodiment;
FIGS. 3A and 3B are views illustrating data structures of character correction information according to an exemplary embodiment;
FIG. 4 is a flowchart illustrating a method of correcting a character by acquiring character correction information of a display apparatus according to an exemplary embodiment;
FIG. 5 is a flowchart illustrating a method of correcting a character by determining character correction information according to an application being executed according to an exemplary embodiment;
FIG. 6 is a flowchart illustrating a method of correcting a character by determining character correction information according to resolution of a display apparatus and a character size according to an exemplary embodiment;
FIGS. 7A and 7B are views illustrating examples of correcting a character by determining character correction information according to resolution of an apparatus and a character size according to an exemplary embodiment;
FIG. 8 is a flowchart illustrating a method of correcting a character by determining character correction information according to stroke complexity of a character according to an exemplary embodiment;
FIGS. 9A to 9H are views illustrating examples of correcting a character by determining character correction information according to stroke complexity of a character according to an exemplary embodiment;
FIG. 10 is a flowchart illustrating a method of correcting a character by determining character correction information according to brightness of a display apparatus and colors of a character and a background according to an exemplary embodiment;
FIGS. 11A to 11D are views illustrating examples of correcting a character by determining character correction information according to brightness of a display apparatus and colors of a character and a background according to an exemplary embodiment;
FIG. 12 is a flowchart illustrating a method of correcting a character by determining character correction information according to a font type of an input character according to an exemplary embodiment;
FIGS. 13A and 13B are views illustrating examples of correcting a character by determining character correction information according to a font type of an input character according to an exemplary embodiment; and
FIG. 14 is a flowchart illustrating a method of outputting text of a display apparatus according to an exemplary embodiment.

### DETAILED DESCRIPTION

Hereinafter, exemplary embodiments will be described in more detail with reference to the accompanying drawings.

In the following description, the same reference numerals are used for the same elements when they are depicted in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, functions or elements known in the related art are not described in detail since they would obscure the exemplary embodiments with unnecessary detail.

Expression such as "at least one of," when preceding a list of elements, modify the entire list of elements and do not modify the individual elements of the list.

Hereinafter, the term "unit" refers to a software component, or a hardware component such as FPGA or ASIC, and performs a certain function. However, the "unit" is not limited to software or hardware. The "unit" may be configured in an addressable storage medium and may be configured to be executed by one or more processors. Hence, the "unit" includes elements such as software elements, object-oriented software elements, class elements, and task elements, and processes, functions, attributes, procedures, subroutines, segments of program codes, drivers, firmware, micro-codes, circuits, data, databases, data structures, tables, arrays, and variables. The functions provided in the elements and the units may be combined into a fewer number of elements and units or may be divided into a larger number of elements and units.

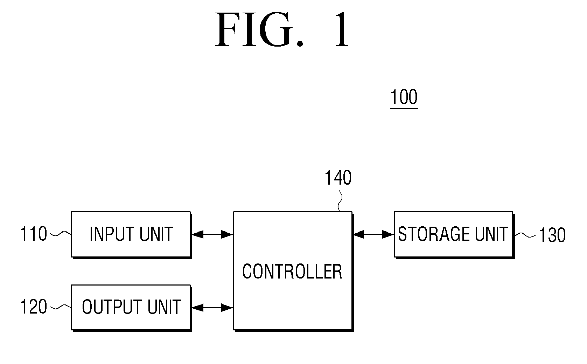

FIG. 1 is a block diagram illustrating a configuration of a display apparatus 100 according to an exemplary embodiment. As illustrated in FIG. 1, the display apparatus 100 includes an input unit 110, an output unit 120, a storage unit 130, and a controller 140. The display apparatus 100 may be implemented with various apparatuses configured to output text, such as a smart phone, a smart television, a tablet personal computer (PC), a laptop PC, or a desktop PC.

FIG. 1 illustrates an exemplary embodiment in which the display apparatus 100 is an apparatus having various functions such as a text output function or a display function, and integrally illustrates various components. Therefore, in exemplary embodiments, portions of the components illustrated in FIG. 1 may be omitted or modified or other components may be added.

The input unit 110 inputs a user command for controlling an overall function of the display apparatus 100. Specifically, the input 110 inputs the user command for acquiring character information of a character to be input by a user.

The input unit 110 may be implemented with various input devices such as a keypad, a touch screen, a pen, a mouse, or a remote controller.

The output unit 120 outputs image data under control of the controller 140. Specifically, the output unit 120 may output a character corresponding to the user command input through the input unit 110. The character output by the output unit 120 may be corrected according to at least one of a characteristic of the display apparatus and a characteristic of the input character.

The output unit 120 may be implemented with a liquid crystal display (LCD), but the output unit 120 is not limited thereto. The output unit 120 may be implemented with various displays such as an organic light-emitting diode (OLED), a thin film transistor (TFT)- or a cathode-ray tube(CRT). Further, the output unit 120 may be implemented with an output device such as a printer in addition to the display device as described above.

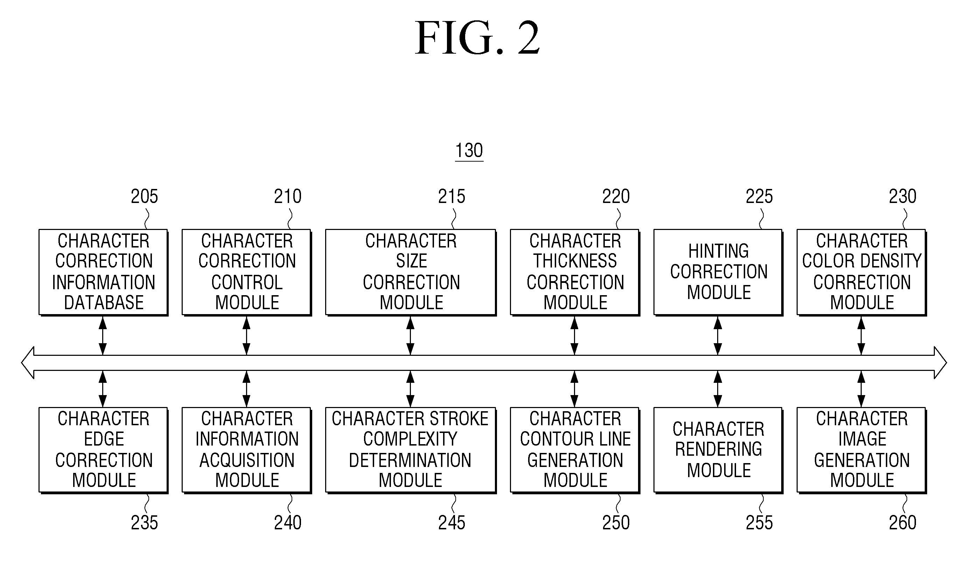

The storage unit 130 stores various modules and data for controlling the display apparatus 100. Specifically, the storage unit 130 may include various modules configured to correct character information of a character input by the user and output the corrected character information. The modules of the storage unit 130 will be described in detail with reference to FIG. 2. As illustrated in FIG. 2, to correct the character information and output the corrected character information, the storage unit 130 includes a character correction information database 205, a character correction control module 210, a character size correction module 215, a character thickness correction module 220, a hinting correction module 225, a character color density correction module 230, a character edge correction module 235, a character information acquisition module 240, a character stroke complexity determination module 245, a character contour line generation module 250, a character rendering module 255, and a character image generation module 260.

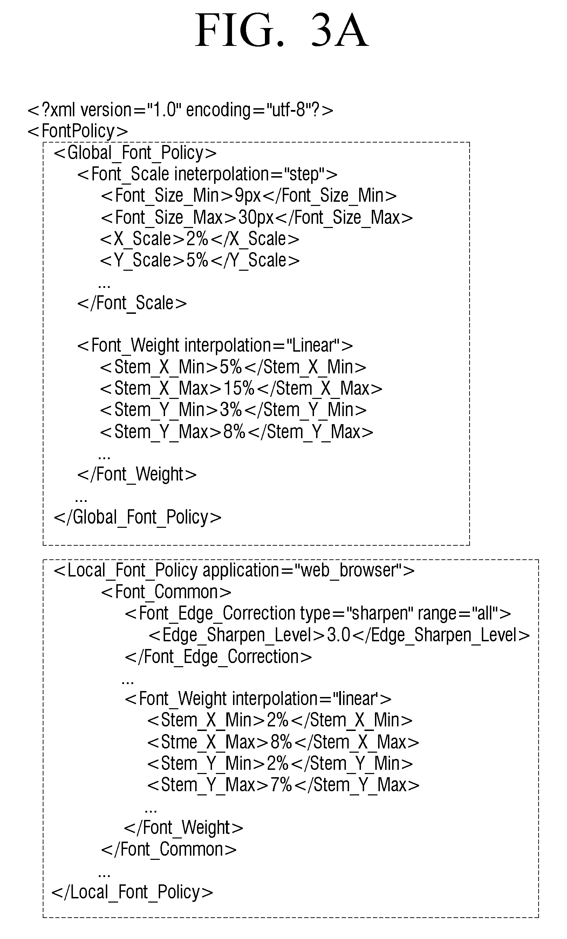

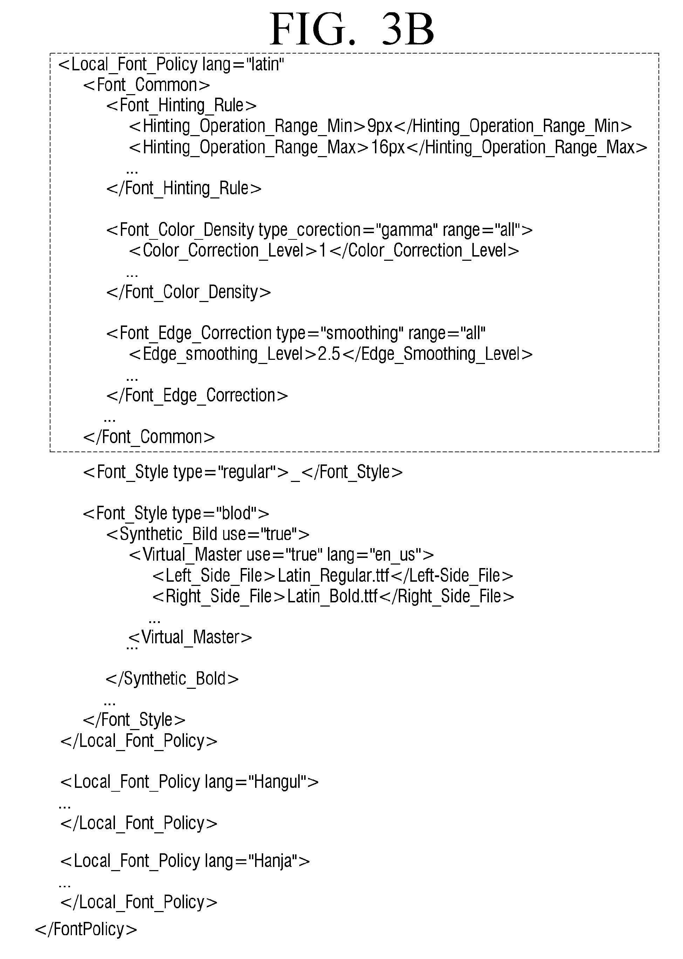

The character correction information database 205 stores character correction information data for correcting character information according to a characteristic of the display apparatus and a characteristic of a character. At this time, the character correction information may include global correction information and local correction information. The global correction information may comprise character correction information commonly applied to the whole apparatus, and the local correction information may comprise character correction information different according to a specific application unit, a specific language unit, a characteristic font file unit, a specific font style, or the like. When the global correction information and the local correction information are simultaneously applied, the character may be corrected by preferentially applying the local correction information. Further, information stated in the global correction information and the local correction information may have a hierarchical structure. A metadata structure of the character correction information according to an exemplary embodiment may be defined as illustrated in FIGS. 3A and 3B.

The character correction control module 210 may provide a function to correct the character information according to the character correction information. Further, the character correction control module 210 may commonly perform the character correction function and may perform the character correction function according to an application. The character correction control module 210 may perform the character correction function only on a specific font.

The character size correction module 215 provides a function to control sizes of a horizontal contour line and a vertical contour line of a character.

The character thickness correction module 220 provides a function to control a horizontal stroke and a vertical stroke of a character.

The hinting correction module 225 provides a function to control correction information for strokes included in a character according to a character size and a language.

The character color density correction module 230 provides a function to correct values of pixels constituting a character with respect to a character image generated after a character rendering process is executed.

The character edge correction module 235 provides a function to remove a step effect by performing correction of smoothing or sharpening a contour line of a character image generated after a character rendering process is executed.

The character information acquisition module 240 provides a function to extract character information from a font file, classify the extracted character information, and store the classified character information.

The character stroke complexity determination module 245 provides a function to confirm a Unicode category of a character to determine complexity of the character.

The character contour line generation module 250 provides a function to generate a contour line of a character using a control point included in character information.

The character rendering module 255 provides a function to generate a raw glyph image by performing rasterization according to contour line information of a character, hinting information, and character correction information.

The character image generation module 260 provides a function to generate a character bitmap based on a raw glyph image according to color information and correction information of a character and output the generated character bitmap to the output unit 120.

The storage unit 130 including a plurality of modules configured to correct the character and output the corrected character as illustrated in FIG. 2 is merely one exemplary embodiment, and the storage unit 130 may further include other modules.

Referring back to FIG. 1, the controller 140 controls an overall operation of the display apparatus 100 according to the user command input through the input unit 110. Specifically, the controller 140 may perform a correction process on a character corresponding to the user command input through the input unit 110 using the modules stored in the storage unit 130, and output the corrected character through the output unit 120.

Specifically, when a user command for inputting a character through the input unit 110 is input to the display apparatus 100, the controller 140 may acquire character information corresponding to the user command. The character information may include at least one of a unique identification (ID) of a character, control point information related to shape information of a character, connection information defining connection attributes of the control point, metric information associated to an arrangement of a plurality of characters, and hinting information for aligning a contour line of a character to a grid. However, the information included in the character information as described above is merely one exemplary embodiment, and other information (for example, color information of a character, and the like) may be further included.

When the character information is acquired, the controller 140 may determine character correction information for input character information according to at least one of a characteristic of the display apparatus 100 and a characteristic of the character input through the input unit 110. The characteristic of the display apparatus may include at least one of resolution of the display apparatus, current brightness of the display apparatus, a display type of the display apparatus, a battery level of the display apparatus, and a type of an application executed in the display apparatus. The characteristic of the input character may include at least one of a size of the input character, stroke complexity of the input character, a style of the input character, colors of the input character and a background, a stroke thickness of the input character, a language kind of the input character, and a Unicode category of the input character.

In one exemplary embodiment, the controller 140 may acquire resolution information of the display apparatus 100, and determine the character correction information for the input character according to character size information included in the character information and the resolution information of the display apparatus. Specifically, the controller 140 may acquire the resolution information and pixel per inch (PPI) information of the display apparatus 100, and determine the character correction information for controlling an X-scale (a horizontal size) and a Y-scale (a vertical size) of the character according to the character size, the resolution information, and the PPI information.

In another exemplary embodiment, the controller 140 may acquire current brightness information of the display apparatus 100, and determine the character correction information for color of the input character by applying a weight of the acquired current brightness information. Specifically, the controller 140 may acquire the current brightness information of the display apparatus 100, determine the character correction information for the color of the character to boldly represent the character when a level of the current brightness of the display apparatus is larger than a preset value, and determine the character correction information for the color of the character to lightly represent the character when the level of the current brightness of the display apparatus 100 is less than the preset value. At this time, the character correction information according to the current brightness of the display apparatus 100 may be changed according to a setting of the user. For example, when a low power mode is set by the user, the controller 140 may determine the character correction information for the color of the character to lightly represent the color of the character generally. In another example, when a battery level of the display apparatus 100 is equal to or less than a preset value, the controller 140 may determine the character correction information for the color of the character to lightly represent the color of the character generally.

In another exemplary embodiment, the controller 140 may determine an application currently executed in the display apparatus 100, and determine the character correction information for the input character according to the determined application. Specifically, the controller 140 may determine the application currently executed in the display apparatus 100. When the application currently executed is determined as an application in which character representation is highly regarded (for example, a web browser application, a mail application, a message sending application, or the like), the controller 140 may determine the character correction information for the color of the character to boldly represent the color of the input character.

In another exemplary embodiment, the controller 140 may determine stroke complexity based on a kind of the input character, and determine the character correction information for a stroke thickness of the input character according to the determined stroke complexity. Specifically, the controller 140 may determine the stroke complexity according to the kind of the input character. For example, the controller 140 may determine the stroke complexity to a high level when the kind of the input character is Chinese character, determine the stroke complexity to a medium level when the kind of the input character is Hangul, and determine the stroke complexity to a low level when the kind of the input character is English. The controller 140 may determine the character correction information to thinly represent the stroke thickness of the character when the level of the stroke complexity is increased, and determine the character correction information to thickly represent the stroke thickness of the character when the level of the stroke complexity is reduced.

In another exemplary embodiment, the controller 140 may determine the colors of the input character and the background, and determine the character correction information for color density of the input character by comparing the color of the input character with the color of the background. Specifically, the controller 140 may compare the colors of the input character and the background by checking pixel information of the colors of the input character and the background. When it is determined that the color of the input character is brighter than the color of the background, the controller 140 may determine the character correction information for the color density of the character to more brightly represent the color of the input character. When it is determined that the color of the input character is darker than the color of the background, the controller 140 may determine the character correction information for the color density of the character to more darkly represent the color of the input character.

In another exemplary embodiment, the controller 140 may determine a type of the input character, and determine the character correction information according to the type of the input character. Specifically, the controller 140 may determine whether the type of the input character is a sans-serif type or a serif type. When it is determined that the type of the input character is the serif type, the controller 140 may calculate character edge correction intensity by applying a weight according to the resolution of the display apparatus 100 and the size of the character, and determine the character correction information for the input character.

The above-described various exemplary embodiments may be individually implemented, but the embodiments are merely exemplary, and two or more exemplary embodiments may be multiply implemented. For example, the controller 140 may simultaneously determine the brightness of the display apparatus 100, the type of the character, and the stroke complexity of the character to determine the character correction information.

As described above, when a variety of character correction information are determined, the controller 140 may update a character metric according to the determined character correction information. At this time, the character metric includes information such as character spacing, line spacing, left margin, right margin, or the like. That is, when the character is corrected by the character correction information, characters may be viewed to overlap, or the character spacing or the line spacing may not be uniform. Therefore, the controller 140 may update the character metric to prevent the phenomenon in which characters may be viewed to overlap, or the character spacing or the line spacing may not be uniform.

The controller 140 may correct character information acquired based on the determined character correction information to generate character contour line information, and generate a character contour line based on the character contour line information.

The controller 140 may perform a rendering process using the character contour line information to generate a raw glyph image.

The controller 140 may determine whether or not a post correction process is necessary to be performed on the raw glyph image, and perform the post correction process according to a determination result. Specifically, the controller 140 may perform the post correction process on the raw glyph image based on the character correction information (specifically, character color density correction information, character edge correction information, or the like). In particular, the controller 140 may correct a bright portion of the character to be brighter and correct a dark portion of the character to be darker, based on the character color density correction information. The controller 140 may perform a process of removing a step phenomenon in a character having many oblique lines based on the character edge correction information. Further, the controller 140 may improve readability and visibility by smoothly or sharply processing the contour of the character.

The controller 140 may control the output unit 120 to output a post-processed character image.

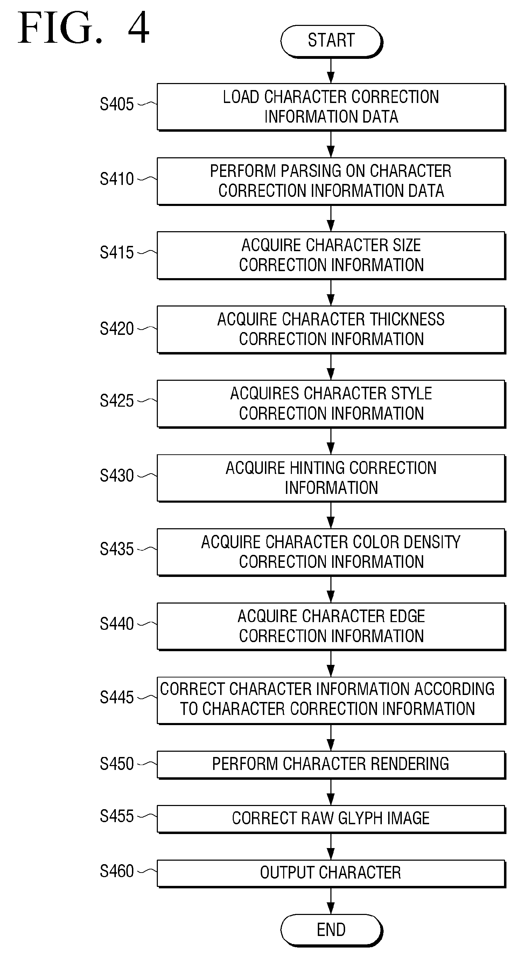

Hereinafter, methods of outputting text of a display apparatus 100 according to various exemplary embodiments will be described in detail with reference to FIGS. 4 to 14.

FIG. 4 is a view illustrating a method of correcting a character by acquiring a variety of character correction information in the display apparatus 100 according to an exemplary embodiment.

First, the display apparatus 100 loads character correction information data (S405). The character correction information has a file type, and the file structure may have an extensible mark-up language (XML) structure as illustrated in FIGS. 3A and 3B or other structures.

The display apparatus 100 performs parsing on the character correction information data (S410). Specifically, the display apparatus 100 may perform the parsing on the character correction information data according to a character correction function. In particular, the display apparatus 100 may perform parsing on the character correction information data by checking whether loaded character correction information is global correction information or local correction information.

The display apparatus 100 acquires character size correction information based on the parsed character correction information (S415). Specifically, the display apparatus 100 may determine whether or not the character size correction information is necessary, and the display apparatus 100 may acquire the character size correction information using the parsed character correction information when the character size correction information is necessary.

The display apparatus 100 acquires character thickness correction information based on the parsed character correction information (S420). Specifically, the display apparatus 100 may determine whether or not the character thickness correction information is necessary, and acquire the character thickness correction information using the parsed character correction information when the character thickness correction information is necessary.

The display apparatus 100 acquires character style correction information based on the parsed character correction information (S425). Specifically, the display apparatus 100 may determine whether or not correction information for font styles (for example, a gothic type, or the like) exists, and acquire the character style correction information using the parsed character correction information when the correction information exists in a corresponding font style.

The display apparatus 100 acquires hinting correction information based on the parsed character correction information (S430). Specifically, the display apparatus 100 may determine whether or not the hinting correction information exists in the character correction information data, and acquire the hinting correction information when the hinting correction information exists. At this time, the display apparatus 100 may determine whether to correct only a character having a specific font point or characters having all font points using the hinting correction information. When the character has a specific font point or more, a difference between characters before correction and after correction is difficult to be recognized even when rendering is performed using the hinting information. Therefore, the correction determining process may remove an unnecessary process of correcting the character having the specific point or more.

The display apparatus 100 acquires character color density correction information based on the parsed character correction information (S435). Specifically, the display apparatus 100 may determine whether or not the character color density correction information is necessary, and acquire the character color density correction information using the parsed character correction information when the character color density correction information is necessary.

The display apparatus 100 acquires character edge correction information based on the parsed character correction information (S440). Specifically, the display apparatus 100 may determine whether or not the character edge correction information is necessary, and acquire the character edge correction information using the parsed character correction information when the character edge correction information is necessary.

The display apparatus 100 corrects character information based on the acquired character correction information (S445). Specifically, the display apparatus 100 may correct the character information such as a control point according to the character size correction information, the character thickness correction information, the hinting correction information, or the like using the various modules as illustrated in FIG. 2.

The display apparatus 100 performs rendering on the character (S450). Specifically, the display apparatus 100 may generate a contour line of the character based on the corrected character information, and perform a rendering process using the generated contour line of the character to generate a raw glyph image.

The display apparatus 100 corrects the raw glyph image (S455). Specifically, the display apparatus 100 may correct the raw glyph image generated based on the character color density correction information and the character edge correction information.

The display apparatus 100 outputs the character (S460).

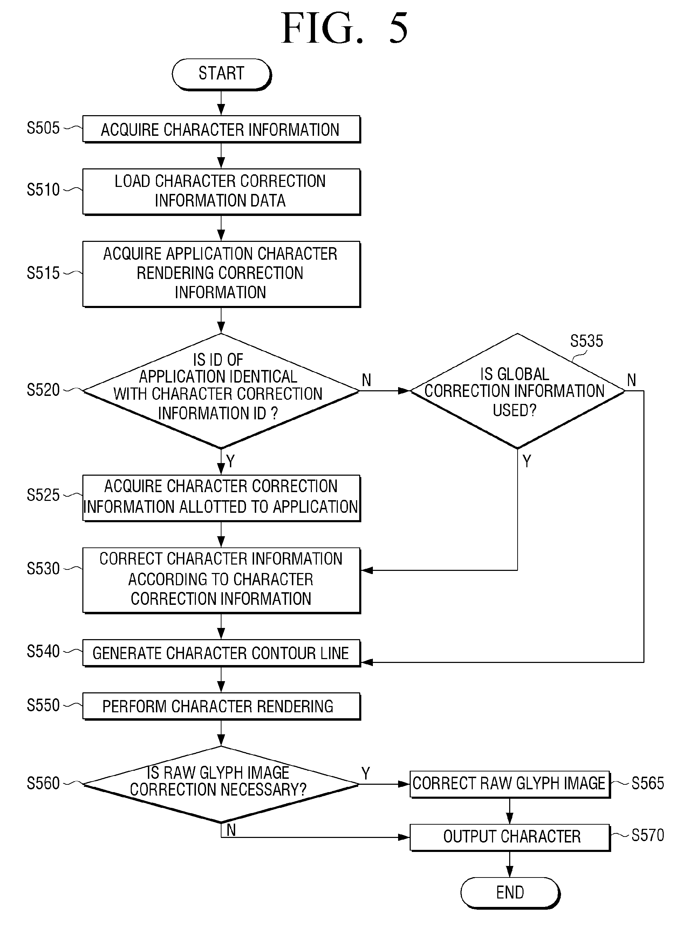

FIG. 5 is a flowchart illustrating a method of correcting a character by determining character correction information according to an executed application according to an exemplary embodiment.

The display apparatus 100 acquires character information (S505). The display apparatus 100 may acquire the character information of a character corresponding to a user command input through the input unit 110. The character information may include at least one of a unique ID of a character, control point information related to shape information of a character, connection information defining connection attribute of the control point, metric information associated to an arrangement of a plurality of characters, and hinting information for aligning a contour line of a character to a grid.

The display apparatus 100 loads character correction information data (S510). The display apparatus 100 acquires application character rendering information stored in the character correction information data (S515).

The display apparatus 100 determines whether or not an ID of an application currently executed is identical to a character correction information ID stored in a database (S520). The currently executed application is an application in which text is highly regarded, and may include a web browser application, a mail application, a text application, or the like.

When the ID of the currently executed application is identical with the character correction information ID (S520-Y), the display apparatus 100 acquires the character correction information allotted to the currently executed application (S525). The display apparatus 100 may acquire character size correction information, character thickness correction information, character style correction information, hinting correction information, character color density correction information, character edge correction information, or the like.

The display apparatus 100 corrects the character information according to the acquired character correction information (S530).

The display apparatus 100 generates a contour line of the character according to the corrected character information (S540), and performs rendering on the character (S550).

The display apparatus 100 determines whether or not correction for a raw glyph image generated after the rendering is necessary (S560). Specifically, the display apparatus 100 may determine whether or not the correction for the raw glyph image is necessary by determining whether or not character image correction information (for example, the character color density correction information, the character edge correction information, or the like) exists in the character correction information allotted to the currently executed application.

When the correction for the raw glyph image is not necessary (S560-N), the display apparatus 100 outputs the character (S570). When the correction for the raw glyph image is necessary (S560-Y), the display apparatus 100 corrects the raw glyph image according to the character image correction information (S565), and outputs the corrected character (S570).

When the ID of the currently executed application is not identical with the character correction information ID stored in the database (S520-N), the display apparatus 100 determines whether or not to use global correction information stored in a database (S535). When the global correction information is used (S535-Y), the display apparatus 100 corrects the character information according to the global correction information (S530). When the global correction information is not used (S535-N), the display apparatus 100 may generate the contour line of the character to be directly output without the correction of the character information (S540).

As described above, the character is corrected using the character correction information allotted to a specific application (for example, the application in which a character is highly regarded). Therefore, when the application in which the character is highly regarded is used, the user may view text having improved readability and visibility.

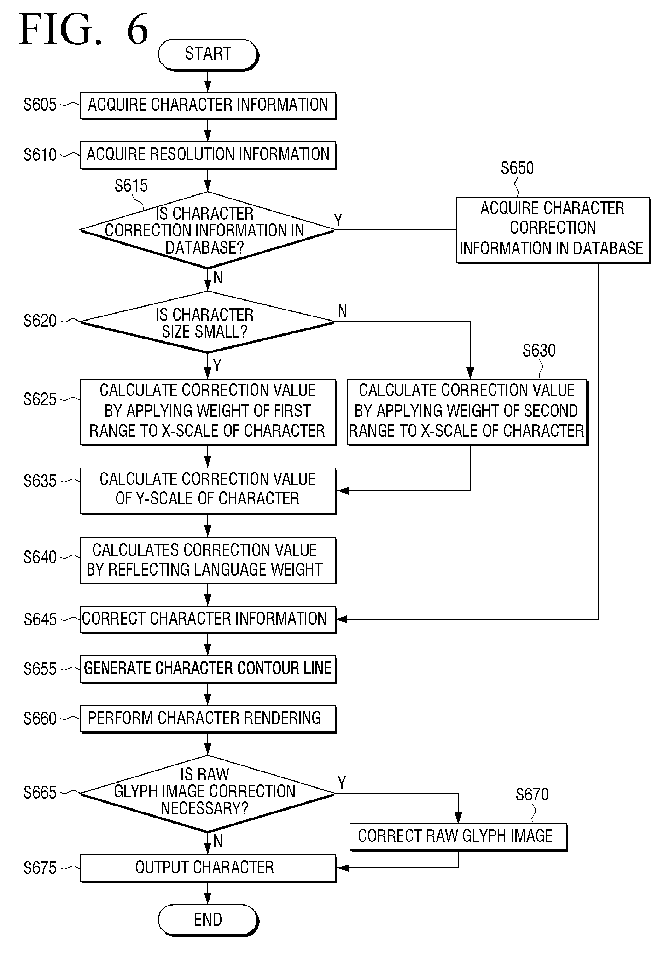

FIG. 6 is a flowchart illustrating a method of correcting a character by determining character correction information according to apparatus resolution and a character size according to an exemplary embodiment.

First, the display apparatus 100 acquires character information (S605). Specifically, the display apparatus 100 may acquire the character information of a character corresponding to a user command input through the input unit 110.

The display apparatus 100 acquires resolution information (S61 0). The resolution information of the display apparatus 100 may include a variety of resolution information, such as resolution or PPI of the display apparatus 100.

The display apparatus 100 determines whether or not character correction information exists in a database (S615).

When it is determined that the character correction information exists in the database (S615-Y), the display apparatus 100 acquires the character correction information existing in the database (S650), and corrects the character information based on the acquired character correction information (S645).

When it is determined that the character correction information does not exist in the database (S615-N), the display apparatus 100 determines whether or not a character size is small based on information for a character size stored in the character information (S620). In one exemplary embodiment, the display apparatus 100 may determine that the character size is small when a font point is 16 pixels or less.

When it is determined that the character size is small (S620-Y), the display apparatus 100 calculates a correction value by applying a weight of a first range to an X-scale of the character (S625). Specifically, when the character size is small, the display apparatus 100 may calculate the correction value by applying the weight of 2 to 5 % to the X-scale value according to the resolution and PPI information of the display apparatus.

When it is determined that the character size is not small (S620-N), the display apparatus 100 calculates a correction value by applying a weight of a second range to the X-scale of the character (S630). Specifically, when the character size is large, the display apparatus 100 may calculate the correction value by applying the weight of 6 % or more to the X-scale according to the resolution and PPI information of the display apparatus.

The display apparatus 100 calculates a correction value of a Y-scale of the character (S635). The correction value of the Y-scale may be calculated to correspond to the method of calculating the correction value of the X-scale.

The display apparatus 100 calculates a final correction value by reflecting a language weight (S640). In particular, the display apparatus 100 may calculate the final correction value by reflecting the language weight according to stroke complexity of an input language. For example, when the language has high stroke complexity, the display apparatus 100 may add a high weight to the X-scale and the Y-scale to improve expression.

The display apparatus 100 corrects the character information using the calculated final correction value (S645). That is, the display apparatus 100 may correct the X-scale value and the Y-scale value of the character using the calculated final correction value. At this time, when correction of a character metric is necessary due to the corrections of the X-scale and the Y-scale, the display apparatus 100 may correct character metric information such as character spacing, line spacing, left margin, or right margin.

The display apparatus 100 generates a contour line of the character according to the corrected character information (S655), and performs rendering on the character (S660).

The display apparatus 100 determines whether or not correction for a raw glyph image generated after the rendering is necessary (S665). Specifically, the display apparatus 100 may determine whether or not the correction for the raw glyph image is necessary by determining whether or not character image correction information (for example, character color density correction information, character edge correction information, or the like) exists in the character correction information according to the character size and the resolution information.

When the correction for the raw glyph image is not necessary (S665-N), the display apparatus 100 outputs the character (S675). When the correction for the raw glyph image is necessary (S665-Y), the display apparatus 100 corrects the raw glyph image according to the character image correction information (S670), and outputs the corrected character (S675).

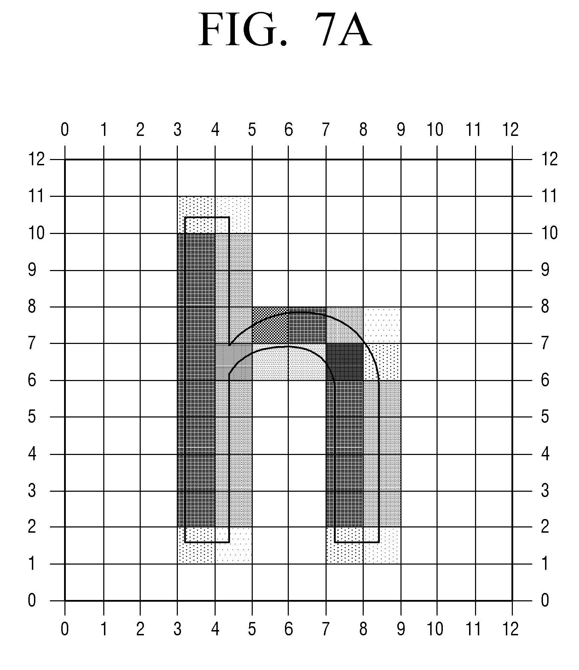

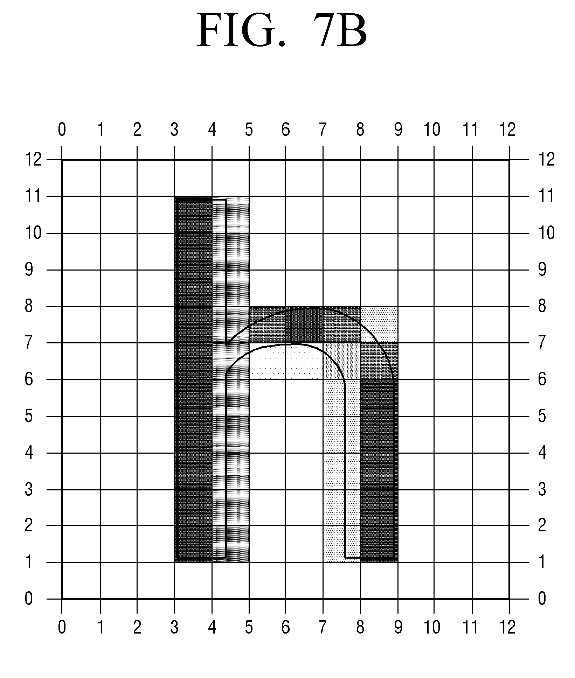

As described above, the character information is corrected according to the character size and the resolution information, and thus the user may view text suitably corrected according to the resolution of the display apparatus 100. Specifically, FIGS. 7A and 7B are views illustrating examples in which a character is corrected by determining character correction information according to resolution of the display apparatus 100 and a character size according, to an exemplary embodiment.

In particular, FIG. 7A is a view illustrating color density of each pixel constituting a character "h" when rendering is performed on the character through the related technology, and FIG. 7B is a view illustrating color density of each pixel constituting a character "h" when rendering is performed on the character by controlling a character size according to the exemplary embodiment.

As shown in FIGS. 7A and 7B, the color density of center pixels constituting strokes of the character in FIG. 7B is stronger than that of center pixels constituting strokes of the character in FIG. 7A. Therefore, readability and visibility of the character may be improved by correcting the character size according to the resolution of the display apparatus and the character size.

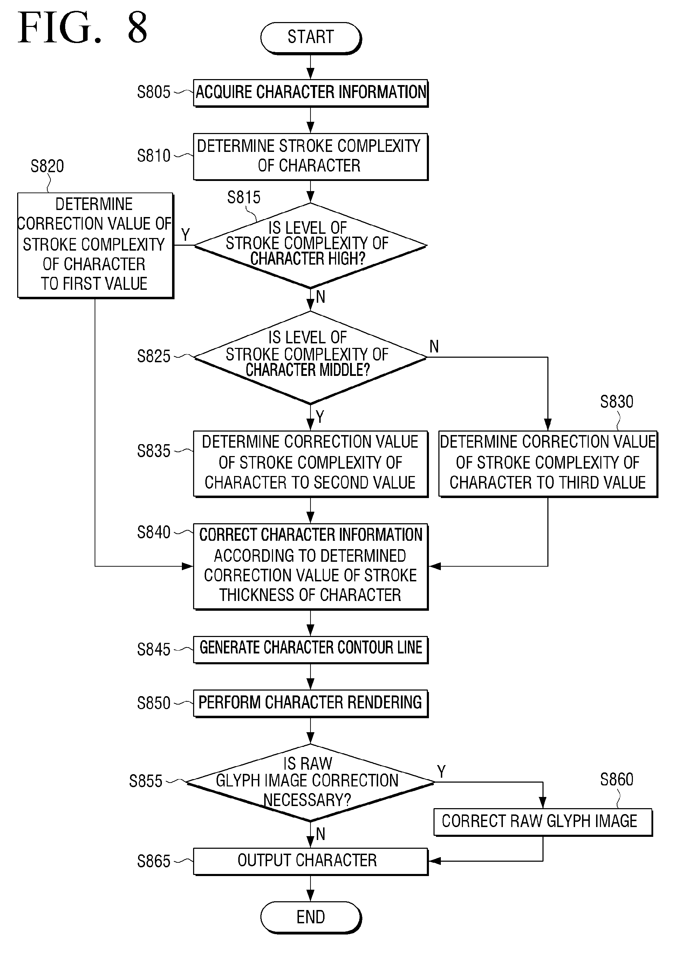

FIG. 8 is a flowchart illustrating a method of correcting a character by determining character correction information according to stroke complexity of a character according to an exemplary embodiment.

First, the display apparatus 100 acquires character information (S805). Specifically, the display apparatus 100 may acquire the character information of a character corresponding to a user command input through the input unit 110. In particular, the display apparatus 100 may acquire the character information including language information of the character.

The display apparatus 100 determines stroke complexity of the input character (S810). The display apparatus 100 may determine the stroke complexity of the character according to the language information of the character. For example, the display apparatus 100 may determine a level of the stroke complexity of a Chinese character to high, determine a level of stroke complexity of a Hangul character to middle, and determine a level of stroke complexity of an English character to low.

The display apparatus 100 determines whether or not the level of the stroke complexity of the input character is high (S815).

When it is determined that the level of the stroke complexity is high (S815-Y), the display apparatus 100 determines a correction value of a stroke thickness of the character to a first value (S820). At this time, the first value may be 50 % of the original stroke thickness.

When it is determined that the level of the stroke complexity is not high (S815-N), the display apparatus 100 determines whether or not the level of the stroke complexity of the input character is middle (S825).

When it is determined that the level of the stroke complexity is middle (S825-Y), the display apparatus 100 determines the correction value of the stroke thickness of the character to a second value (S835). At this time, the second value may be 80 % of the original stroke thickness.

When it is determined that the level of the stroke complexity is not middle (S825-N), the display apparatus 100 determines the level of the stroke complexity of the input character to low, and determines the correction value of the stroke thickness of the input character to a third value (S830). At this time, the third value may be 100 % of the original stroke thickness.

The display apparatus 100 corrects the character information according to the determined correction value of the stroke thickness of the character (S840).

The display apparatus 100 generates a contour line of the character based on the corrected character information (S845), and performs rendering on the character (S850).

The display apparatus 100 determines whether or not correction for a raw glyph image generated after the rendering is necessary (S855). Specifically, the display apparatus 100 may determine whether or not the correction for the raw glyph image is necessary by determining whether or not character image correction information (for example, the character color density correction information, the character edge correction information, or the like) exists in the character correction information corrected according to the stroke complexity of the character.

When the correction for the raw glyph image is not necessary (S855-N), the display apparatus 100 outputs the character (S865). When the correction for the raw glyph image is necessary (S855-Y), the display apparatus 100 corrects the raw glyph image according to the character image correction information (S860), and outputs the corrected character (S865).

As described above, the stroke thickness of the character is corrected according to the stroke complexity of the character, and a phenomenon in which the strokes of the character are viewed to overlap each other may be prevented by thinning the stroke thickness of the character with respect to a language having high stroke complexity.

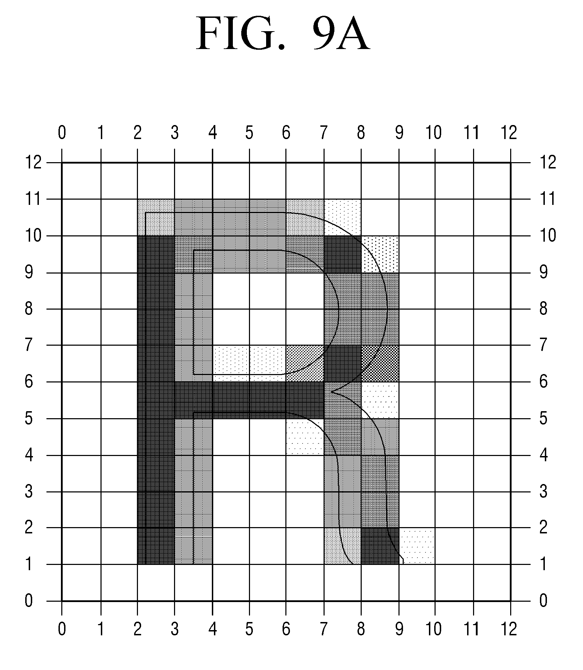

FIGS. 9A to 9H are views illustrating examples in which a character is corrected by determining character correction information according to stroke complexity of a character according to an exemplary embodiment.

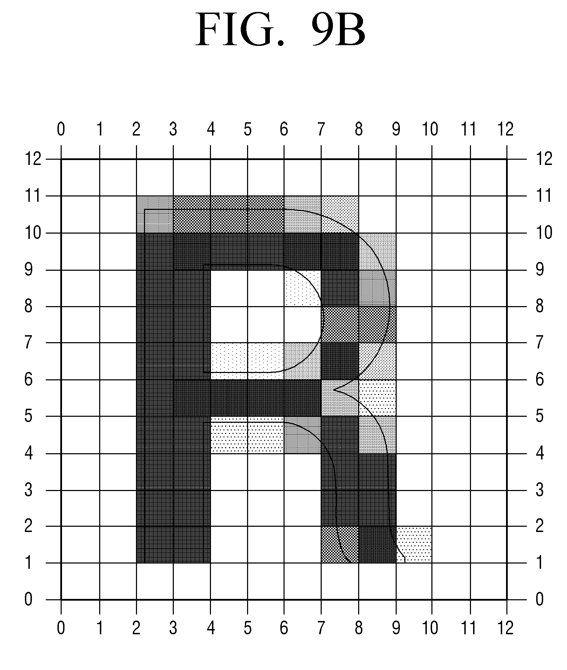

FIG. 9A is a view illustrating color density of each pixel constituting English alphabet "R" when rendering is performed on the character through the related technology, and FIG. 9B is a view illustrating color density of each pixel constituting English alphabet "R" when rendering is performed on the bold type character through the related technology.

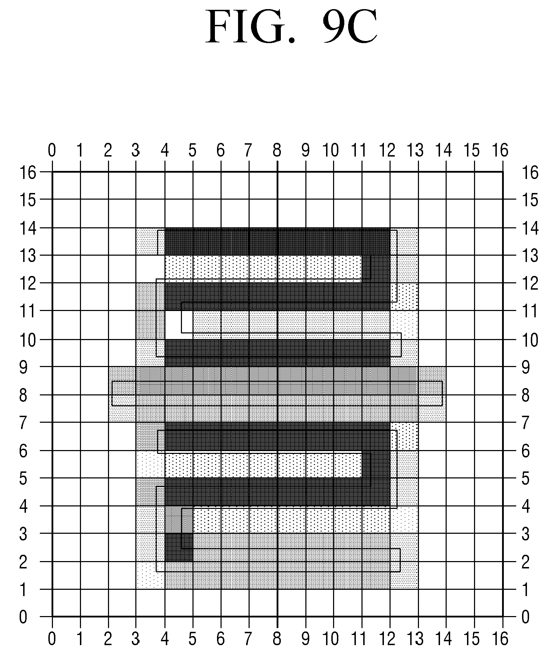

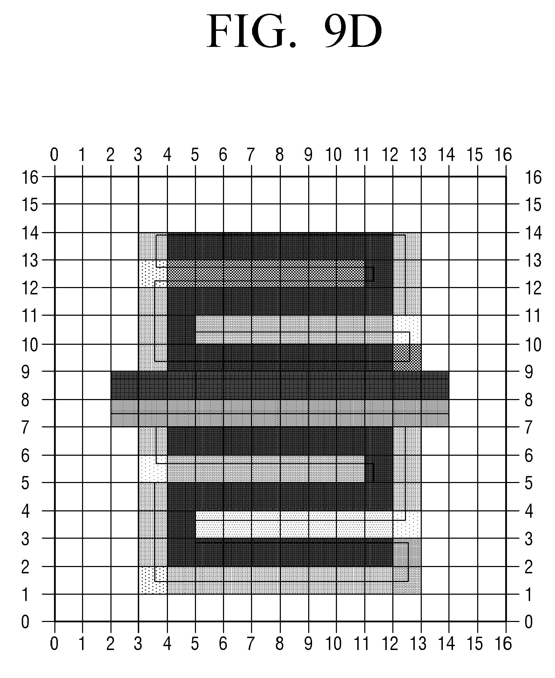

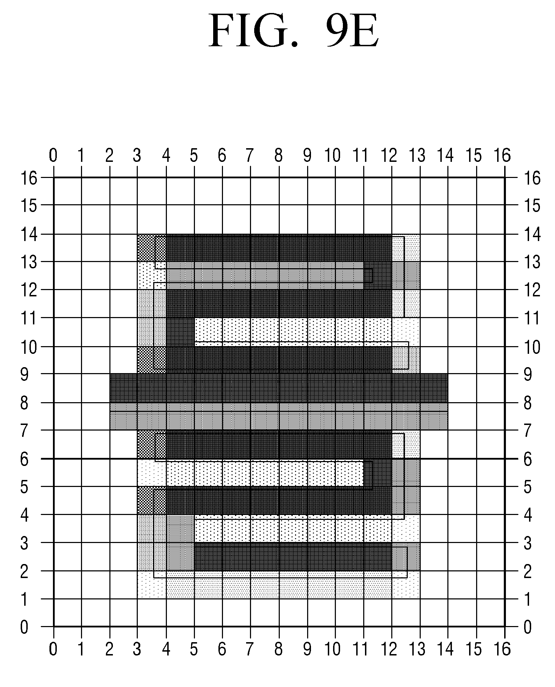

FIG. 9C is a view illustrating color density of each pixel constituting Hangul character 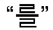 when rendering is performed on the character through the related technology, FIG. 9D is a view illustrating color density of each pixel constituting Hangul character 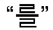 when rendering is performed on the bold type character through the related technology, and FIG. 9E is a view illustrating color density of each pixel constituting Hangul character 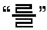 when rendering is performed on the bold type character in the exemplary embodiment.

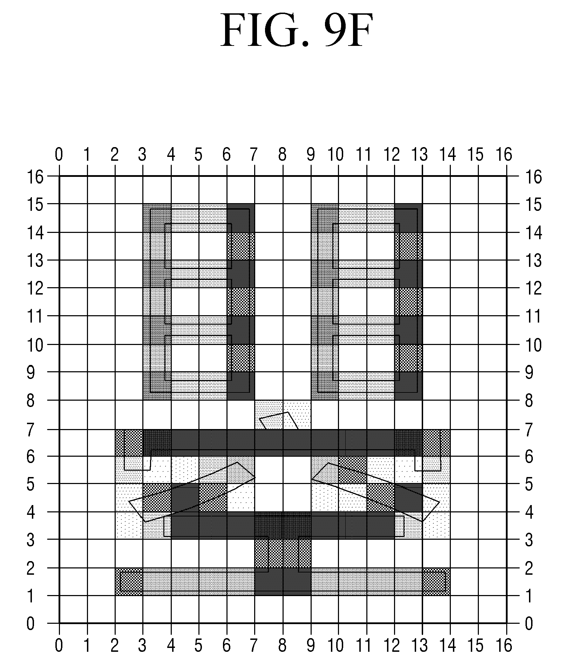

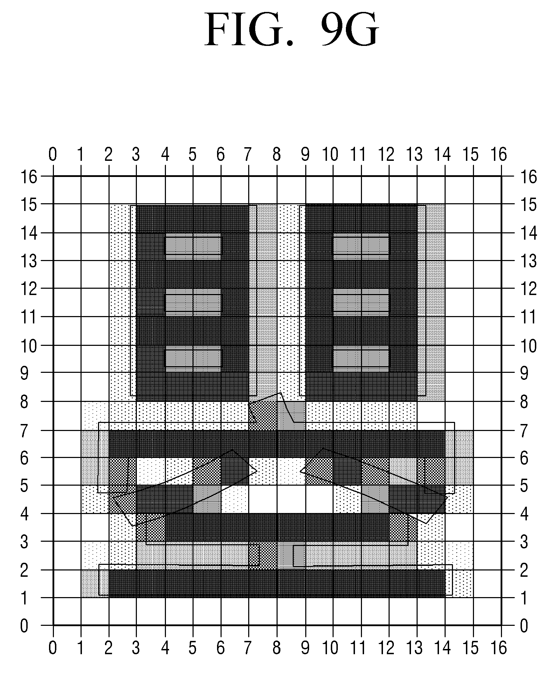

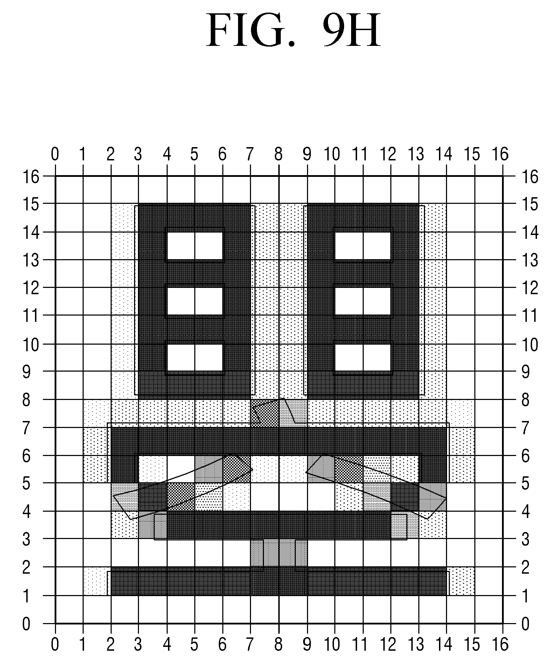

FIG. 9F is a view illustrating color density of each pixel constituting Chinese character 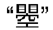 when rendering is performed on the character through the related technology, FIG. 9G is a view illustrating color density of each pixel constituting Chinese character 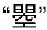 when rendering is performed on the bold type character through the related technology, and FIG. 9H is a view illustrating color density of each pixel constituting Chinese character 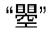 when rendering is performed on the bold type character in the exemplary embodiment.

As illustrated in FIGS. 9A and 9B, when English character having low stroke complexity is represented in a bold type, the phenomenon in which the strokes of the character are viewed to overlap does not occur even then the rendering is performed through the related technology.

However, when Hangul character having stroke complexity relatively higher than English character is represented in a bold type, the phenomenon in which the strokes of the character are viewed to overlap occurs. On the other hand, in the exemplary embodiment, the stroke thickness of Hangul character is corrected to 80 % of the original stroke thickness. Therefore, as illustrated in FIG. 9E, the phenomenon in which the strokes of the character are viewed to overlap is reduced, and thus readability and visibility of the character may be improved.

Further, when Chinese character having stroke complexity relatively higher than English character and Hangul character is represented in a bold type, as illustrated in FIGS. 9F and 9E, the phenomenon in which the strokes of the character are viewed to overlap is more remarkable as compared to Hangul character. When the phenomenon in which the strokes of the character are viewed to overlap is serious, the user may not confirm the input Chinese character properly. However, in the exemplary embodiment, the stroke thickness of Chinese character is corrected to 50 % of the original stroke thickness. Therefore, as illustrated in FIG. 9H, the phenomenon in which the strokes of the character are viewed to overlap may be reduced, and thus readability and visibility of the character may be further improved.

FIG. 8 has described that only the stroke thickness of the character is corrected according to the stroke complexity of the character, but the correction method is merely one exemplary embodiment, and a variety of character correction information (for example, character size, color density, or the like) may be determined according to the stroke complexity of the character.

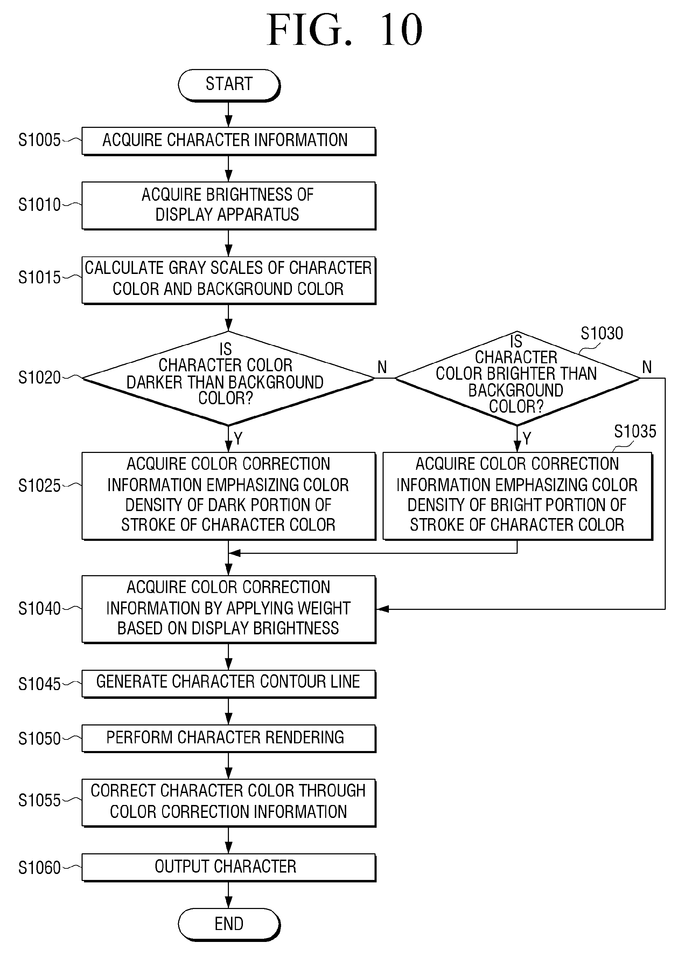

FIG. 10 is a flowchart illustrating a method of correcting a character by determining character correction information according to brightness of a display apparatus, character color, and background color according to an exemplary embodiment.

First, the display apparatus 100 acquires character information (S1005). Specifically, the display apparatus 100 may acquire the character information of a character corresponding to a user command input through the input unit 110. In particular, the display apparatus 100 may acquire the character information including character color information and background color information. The display apparatus 100 acquires brightness information of a display apparatus (S1010). Operation S1005 and operation S1010 may be simultaneously performed, or operation S1010 may be performed before operation S1005.

The display apparatus 100 calculates gray scales of character color of the input character and background color (S1015).

The display apparatus 100 determines whether or not the character color is darker than the background color (S1020). When it is determined that the character color is darker than the background color (S1020-Y), the display apparatus 100 acquires color correction information emphasizing color density of a dark portion of a stroke of the character color (S1025).

When it is determined that the character color is not darker than the background color (S1020-N), the display apparatus 100 determines whether or not the character color is brighter than the background color (S1030). When it is determined that the character color is brighter than the background color (S1030-Y), the display apparatus 100 acquires color correction information emphasizing color density of a bright portion of the stroke of the character color (S1035). When it is determined that brightness of the character color is the same as that of the background color (S1030-N), the display apparatus 100 acquires pre-stored color correction information.

The display apparatus 100 corrects the color correction information by applying a weight based on the brightness of the display apparatus (S1040). Specifically, when the display apparatus 100 is set to a low power mode by a user command or when a level of a battery of the display apparatus 100 is equal to or less than a preset value, the display apparatus 100 may correct the color correction information to entirely reduce a brightness value of the stroke of the character. Alternatively, when the display apparatus 100 maintains a low brightness state, in order for the character to be properly viewed, the display apparatus 100 may correct the color correction information to entirely increase the brightness value of the stroke of the character.

The display apparatus 100 generates a contour line of the character according to the character information and the character correction information (S1045), and performs rendering on the character according to the generated contour line (S1050).

The display apparatus 100 corrects character color through the acquired color correction information described above (S1055).

The display apparatus 100 outputs the character (S1060).

As described above, the color of the character is corrected based on the character color, the background color, and the brightness of the display apparatus 100, and thus the user may view the clear character.

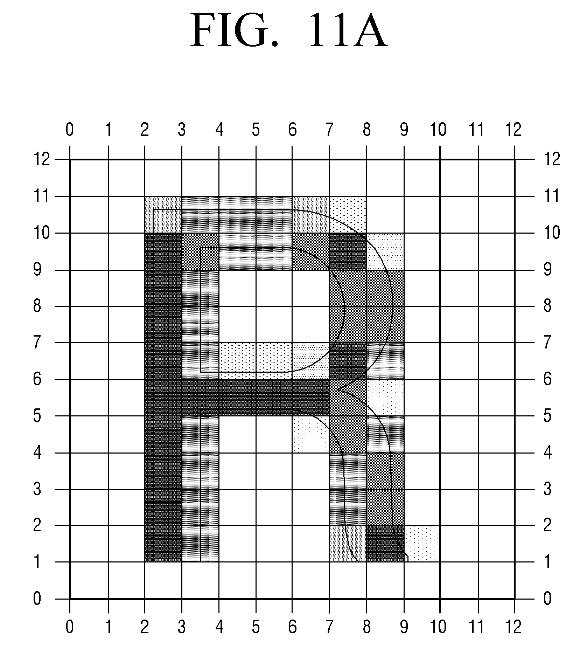

FIGS. 11A to 11D are views illustrating examples in which a character is corrected by determining character correction information according to brightness of a display apparatus, character color, and background color according to an exemplary embodiment.

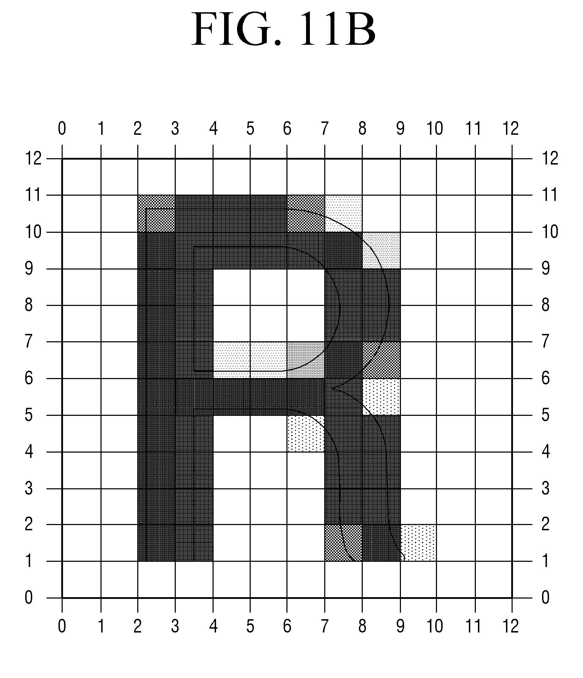

FIG. 11A is a view illustrating color density of each pixel constituting English alphabet "R" when rendering is performed on the character in a bright background through the related technology, and FIG. 11B is a view illustrating color density of each pixel constituting English alphabet "R" when rendering is performed on the character in a bright background according to one exemplary embodiment.

As illustrated in FIG. 11A, color contrast of the background of a bright color and the character of a dark color is not large, and thus the stroke portion of the character is not clearly viewed. On the other hand, in FIG. 11B, the character color is corrected to be darker and is viewed more boldly as compared to the background color. Therefore, readability and visibility of the character may be improved.

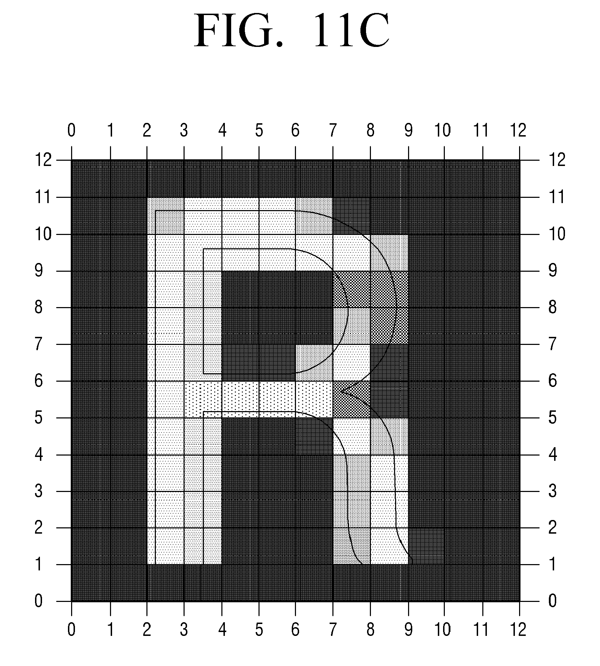

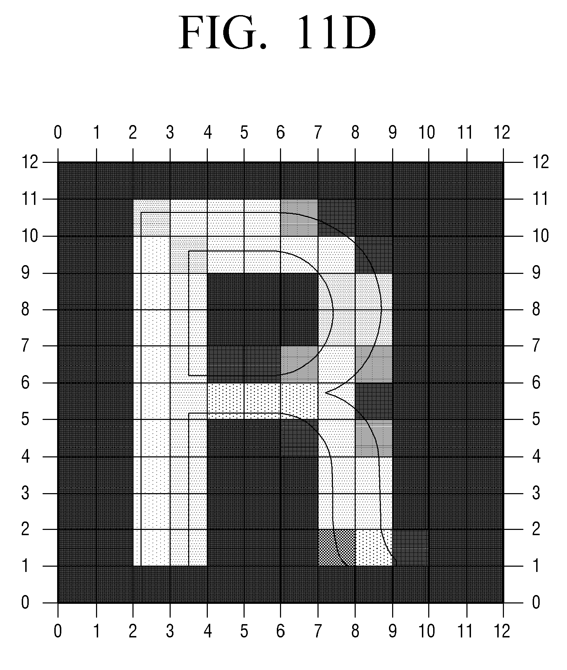

FIG. 11C is a view illustrating color density of each pixel constituting English alphabet "R" when rendering is performed on the character in a dark background through the related technology, and FIG. 11D is a view illustrating color density of each pixel constituting English alphabet "R" when rendering is performed on the character in a dark background in the exemplary embodiment.

As illustrated in FIG. 11C, color contrast of the background of a dark color and the character of a bright color is not large, and thus the stroke portion of the character is not clearly viewed. However, in FIG. 11D, the character color is corrected to be brighter and is viewed more brightly as compared to the background color. Therefore, readability and visibility of the character may be improved.

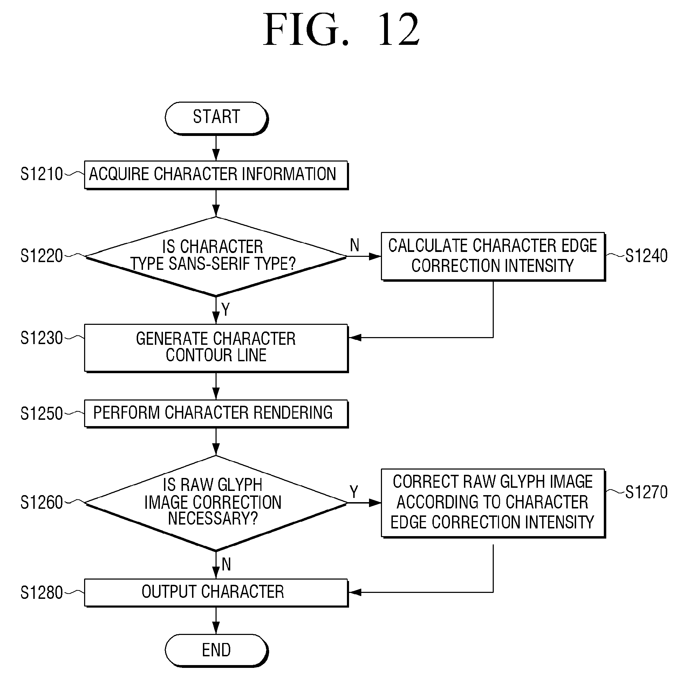

FIG. 12 is a flowchart illustrating a method of correcting a character by determining character correction information according to a font type of an input character according to an exemplary embodiment.

First, the display apparatus 100 acquires character information (S1210). Specifically, the display apparatus 100 may acquire the character information of a character corresponding to a user command input through the input unit 110. In particular, the display apparatus 100 may acquire the character information including character type information.

In one exemplary embodiment, the display apparatus 100 determines whether or not the character type is a sans-serif type (S1220).

When it is determined that the character type is the sans-serif type (S1220-Y), the display apparatus 100 generates a contour line of the character based on the character information and the character correction information (S1230).

When it is determined that the character type is not the sans-serif type (S1220-N), that is, when the character type is a serif type, the display apparatus 100 calculates character edge correction intensity (S1240). The display apparatus 100 may calculate the character edge correction intensity based on resolution information of the display apparatus 100 and character size information. In one exemplary embodiment, in the high resolution display apparatus 100, since an edge of the character is not properly noticeable, the display apparatus 100 may reduce the character edge correction intensity. In the low resolution display apparatus 100, since an edge of the character is properly noticeable, the display apparatus 100 may increase the character edge correction intensity. The display apparatus 100 generates the contour line of the character based on the character information and the character correction information (S1230).

The display apparatus 100 performs rendering on the character based on the generated contour line (S1250).

The display apparatus 100 determines whether or not correction for the rendered raw glyph image is necessary (S1260).

When it is determined that the correction for the raw glyph image is not necessary (S1260-N), the display apparatus 100 outputs the character (S1280).

When it is determined that the correction for the raw glyph image is necessary (S1260-Y), the display apparatus 100 corrects the raw glyph image according to the character edge correction information (S1270). In particular, the display apparatus 100 may correct the raw glyph image according to the character edge correction intensity calculated in operation S1240. The display apparatus outputs the corrected character (S1280).

As described above, the display apparatus may perform character edge correction on the serif type character in which a step effect may frequently occur to improve readability and visibility of the serif type character.

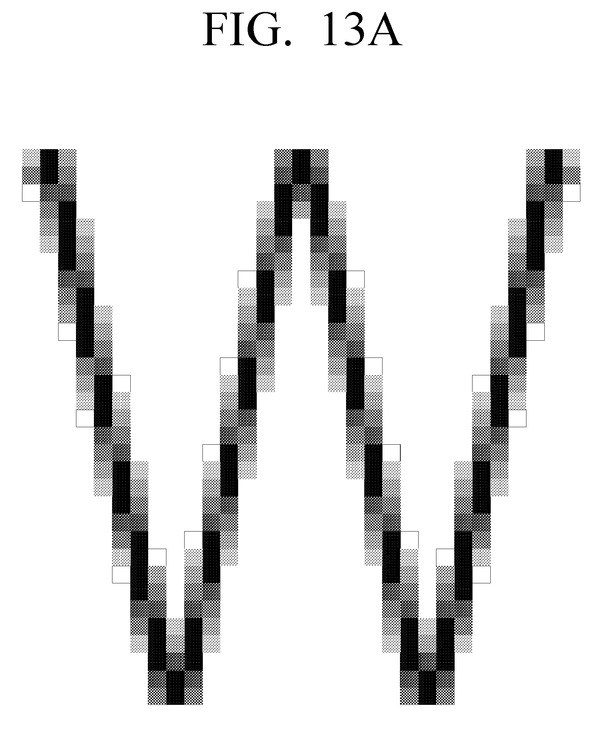

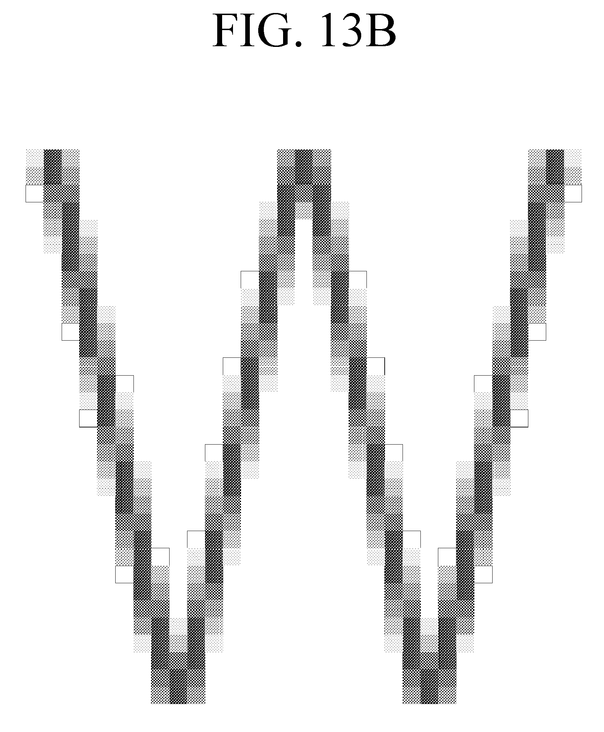

FIGS. 13A and 13B are views illustrating examples in which a character is corrected by determining character correction information according to a font type of an input character according to an exemplary embodiment.

FIG. 13A is a view illustrating color density of each pixel constituting English alphabet "W" of a serif type when rendering is performed on the character through the related technology, and

FIG. 13B is a view illustrating color density of each pixel constituting English alphabet "W" of a serif type when rendering is performed on the character in the exemplary embodiment.

As illustrated in FIG. 13A, when the rendering is performed on English alphabet "W" through the related technology, stroke density is seriously changed according to a character stroke, and thus a step effect occurs. Therefore, the stroke is viewed to be broken and the stroke is roughly viewed. However, as illustrated in FIG. 13B, when the rendering is performed on English alphabet "W" in the exemplary embodiment, it can be seen that stroke density is not seriously changed according to a character stroke, and thus the stroke as displayed appears smooth. Therefore, readability and visibility of the character may be improved in the exemplary embodiment.

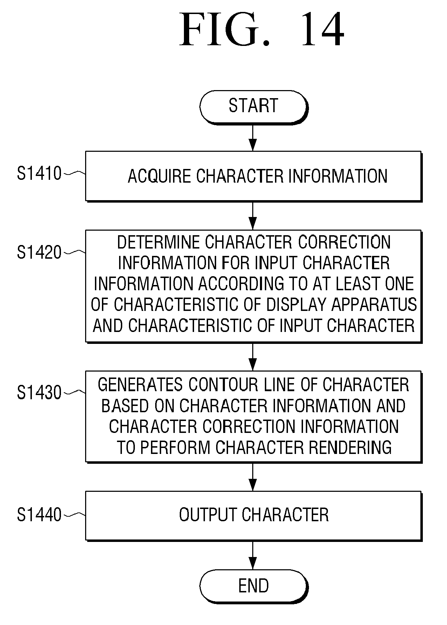

FIG. 14 is a flowchart illustrating a method of outputting text of a display apparatus according to an exemplary embodiment.

First, the display apparatus 100 acquires character information (S1410). Specifically, the display apparatus 100 may acquire the character information of a character corresponding to a user command input through the input unit 110. The character information may include at least one of a unique ID of a character, control point information related to shape information of a character, connection information defining connection attribute of the control point, metric information associated to an arrangement of a plurality of characters, and hinting information for aligning a contour line of a character to a grid. However, the information included in the character information as described above is merely exemplary, and the character information may further include other information (for example, color information of a character, and the like).

The display apparatus 100 determines character correction information for the input character information according to at least one of a characteristic of a display apparatus and a characteristic of the input character (S1420). At this time, the characteristic of the display apparatus 100 may include at least one of resolution of the display apparatus 100, current brightness of the display apparatus 100, a display type of the display apparatus 100, a battery level of the display apparatus 100, and a type of an application executed in the display apparatus 100. The characteristic of the input character may include at least one of a size of the input character, stroke complexity of the input character, a style of the input character, colors of the input character and a background, a stroke thickness of the input character, a language kind of the input character, and a Unicode category of the input character.

The display apparatus generates a contour line of the character based on the character information and the character correction information, and performs rendering on the character based on the generated contour line (S1430). After the rendering process, when correction of a raw glyph image is necessary, the display apparatus 100 may perform a post correction process of performing correction character color on the rendered character, or removing a step effect from the rendered character.

The display apparatus 100 outputs the rendered character (S1440).

As described above, the display apparatus 100 may correct the character according to the characteristic of the display apparatus 100 and the characteristic of the input character to improve readability and visibility of the output character.

The text output method of the display apparatus 100 according to the above-described various exemplary embodiments may be implemented with a program and provided to display apparatuses. In particular, the program including the text output method of the display apparatus may be stored in a non-transitory computer-recordable medium and provided to the display apparatuses.

The non-transitory computer-recordable medium is not a medium configured to temporarily store data such as a register, a cache, or a memory, but an apparatus-readable medium configured to semi-permanently store data. Specifically, the above-described various applications or programs may be stored in the non-transitory apparatus-readable medium such as a compact disc (CD), a digital versatile disc (DVD), a hard disc, a Blu-ray disc, a universal serial bus (USB), a memory card, or a read only memory (ROM), and provided.

The foregoing exemplary embodiments and advantages are merely exemplary and are not to be construed as limiting the present inventive concept. The exemplary embodiments can be readily applied to other types of devices. Also, the description of the exemplary embodiments is intended to be illustrative, and not to limit the scope of the claims, and many alternatives, modifications, and variations will be apparent to those skilled in the art.

## Claims

1. A method of outputting text by a display apparatus (100), the method comprising:
acquiring character information;
**characterised by**
determining character correction information for character information according to at least one of a characteristic of the display apparatus and a characteristic of an input character;
generating a contour line of the character based on the character information and the character correction information to perform rendering of the character; and
outputting the rendered character.

2. The method as claimed in claim 1, wherein the characteristic of the display apparatus (100) includes at least one from amongst a resolution of the display apparatus, a current brightness of the display apparatus, a display type of the display apparatus, a battery level of the display apparatus, and a type of an application executed in the display apparatus.

3. The method as claimed in claim 2, wherein the determining includes:
acquiring a resolution information of the display apparatus (100); and
determining the character correction information for the character by applying a weight according to character size information included in the character information and the resolution information of the display apparatus.

4. The method as claimed in claim 2, wherein the determining includes:
acquiring the current brightness information of the display apparatus (100); and
determining the character correction information for color of the character by applying a weight according to an acquired current brightness information.

5. The method as claimed in claim 2, wherein the determining includes:
determining an application currently executed in the display apparatus (100); and
determining the character correction information for the character according to the determined application.

6. The method as claimed in any one of claim 1 to claim 5, wherein the characteristic of the character includes at least one from amongst a size of the character, stroke complexity of the character, a style of the character, colors of the character and a background, a stroke thickness of the character, a language kind of the character, and a Unicode category of the character.

7. The method as claimed in claim 6, wherein the determining includes:
determining the stroke complexity based on a kind of the character; and
determining the character correction information for the stroke thickness of the character according to the determined stroke complexity.

8. The method as claimed in claim 6, wherein the determining includes:
determining the colors of the character and the background; and
determining the character correction information for color density of the character by comparing the color of the character with the color of the background.

9. The method as claimed in claim 6, wherein the determining includes:
determining whether a type of the character is a sans-serif type or a serif type; and
calculating character edge correction intensity by applying a weight according to resolution of the display apparatus and a character size and determining the character correction information for the character, when the type of the character is the serif type.

10. The method as claimed in any one of claim 1 to claim 9, wherein the character correction information includes at least one from amongst a character size correction information, a character thickness correction information, a character style correction information, a hinting correction information, a character color density correction information, and a character edge correction information.

11. The method as claimed in any one of claim 1 to claim 10, wherein the determining includes determining the character correction information using metadata in which preset character correction information is stored according to the at least one of the characteristic of the display apparatus (100) and the characteristic of the character.

12. The method as claimed in any one of claim 1 to claim 11, further comprising performing post-processing including performing correction on character color of the rendered character, removing a step effect from the rendered character, or processing a contour of the rendered character.

13. The method as claimed in any one of claim 1 to claim 12, wherein the character is one of a character input by a user and a character received from an other device.

14. A display apparatus (100), comprising:
an input unit (110) configured to input a user command for acquiring character information;
**characterised by** further comprising
a storage unit (130) configured to store character correction information;
a controller (140) configured to determine the character correction information for input character information according to at least one of a characteristic of the display apparatus and a characteristic of a character input through the input unit, and generate a contour line of the input character based on the character information and the character correction information to perform rendering of the character; and
an output unit (120) configured to output the rendered character.

15. The display apparatus (100) as claimed in claim 14, wherein the characteristic of the display apparatus includes at least one from amongst a resolution of the display apparatus, a current brightness of the display apparatus, a display type of the display apparatus, a battery level of the display apparatus, and a type of an application executed in the display apparatus.
